# EUROPEAN PATENT APPLICATION

(11) **EP 2 378 734 A1**
(43) Date of publication of application: **19.10.2011**
(21) Application number: 10160256.3
(22) Date of filing: 19.04.2010
(51) Int. Cl.: H04L 29/06

(54) **Network communication devices and data transmission methods**

(71) Applicant: Giga-Byte Technology Co., Ltd., Taipei 231 (TW)
(72) Inventor: Lin, Hou-Yuan, 231, Hsin Tien, taipei County (TW); Chen, Chen-Shun, 231, Hsin Tien, Taipei County (TW)
(74) Representative: Schwerbrock, Florian

(57) **Abstract**

A network communication device (100) has multiple communication modules (110,120,130,140,150) and a coordination module (160). The communication modules (110,120,130,140,150) provide data communications services according to a plurality of communication protocols, respectively. The coordination module (160) generates a plurality of sub-data download requests indicating information of a plurality of downlink sub-data according to a data download request with information of a desired downlink data, and sends the sub-data download requests to the communication modules (110,120,130,140,150) for downloading the downlink sub-data. The coordination module (160) further assembles the downloaded downlink sub-data to generate the desired downlink data.

## Description

### BACKGROUND OF THE INVENTION

### Field of the Invention

The invention generally relates to data transmission technologies, and more particularly, to data transmission methods for downloading and/or uploading data via a plurality of communication modules to increase transceiving rates.

### Description of the Related Art

With communication technology advancements in recent years, providing higher and higher transceiving rates has been a goal for wired and wireless communication devices. Meanwhile, several new communication technologies have been developed for different usages. In general, wired communication technologies include cable modem technology and Asymmetric Digital Subscriber Line (ADSL) technology. A network communication device may establish network connections to obtain communication services by connecting its Local Area Network (LAN) port to access points provided by wired communication technologies via a network cable. On the other hand, a large number of wireless communication technologies, including Wireless Fidelity (WiFi) technology, Bluetooth technology, Global System for Mobile communications (GSM) technology, Wideband Code Division Multiple Access (W-CDMA) technology, High-Speed Downlink Packet Access (HSDPA) technology, and Long Term Evolution (LTE) technology, etc., have been developed due to the growing demand for ubiquitous computing. A network communication device may obtain wireless communication services via communication modules embedded therein or an external communication card connected with a network cable, wherein both of the embedded communication modules and the external communication card support one or more of the previously mentioned wireless communication technologies.

In addition, with electronics manufacturing technology advancements, a network communication device normally has several communication modules embedded therein and each of the communication modules supports an individual communication technology. Otherwise, a network communication device may have multiple LAN ports for connecting to external communication cards or devices that support different communication technologies. A user may choose among communication technologies based on his/her own needs or preferences to obtain communication services. However, each of the communication modules has transceiving rate limits and requirement trends are for data to be transceived as fast as possible and in the greatest amounts as possible. Thus, it is required to have a data transmission method for improving data transceiving efficiency.

### BRIEF SUMMARY OF THE INVENTION

Accordingly, embodiments of the invention provide network communication devices and data transmission methods for improving data transceiving efficiency. In one aspect of the invention, a network communication device is provided. The network communication device comprises a plurality of communication modules and a coordination module. The communication modules provide data communications services according to a plurality of communication protocols, respectively. The coordination module generates a plurality of sub-data download requests indicating information of a plurality of downlink sub-data according to a data download request with information of a desired downlink data, and sends the sub-data download requests to the communication modules, respectively, for downloading the plurality of downlink sub-data. Lastly, the coordination module assembles the downloaded downlink sub-data to generate the desired downlink data.

In another aspect of the invention, a data transmission method for a network communication device with a plurality of communication modules is provided. In the network communication device, the communication modules provide data communications services according to a plurality of communication protocols, respectively. The data transmission method comprises receiving a data download request with information of a desired downlink data from a user and generating a plurality of sub-data download requests indicating information of a plurality of downlink sub-data according to the information of the desired downlink data in the data download request. Subsequently, the data transmission method sends the sub-data download requests to the communication modules, respectively, for downloading the plurality of downlink sub-data. Lastly, the downloaded downlink sub-data is assembled to generate the desired downlink data.

Other aspects and features of the invention will become apparent to those with ordinary skill in the art upon review of the following descriptions of specific embodiments of the network communication device and the data transmission method for improving data transceiving efficiency.

### BRIEF DESCRIPTION OF DRAWINGS

The invention can be more fully understood by reading the subsequent detailed description and examples with references made to the accompanying drawings, wherein:

Fig. 1 is a block diagram illustrating a network communication device according to an embodiment of the invention;

Fig. 2 is a flow chart illustrating a data transmission method according to an embodiment of the invention; and

Fig. 3 is a flow chart illustrating a data transmission method according to another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

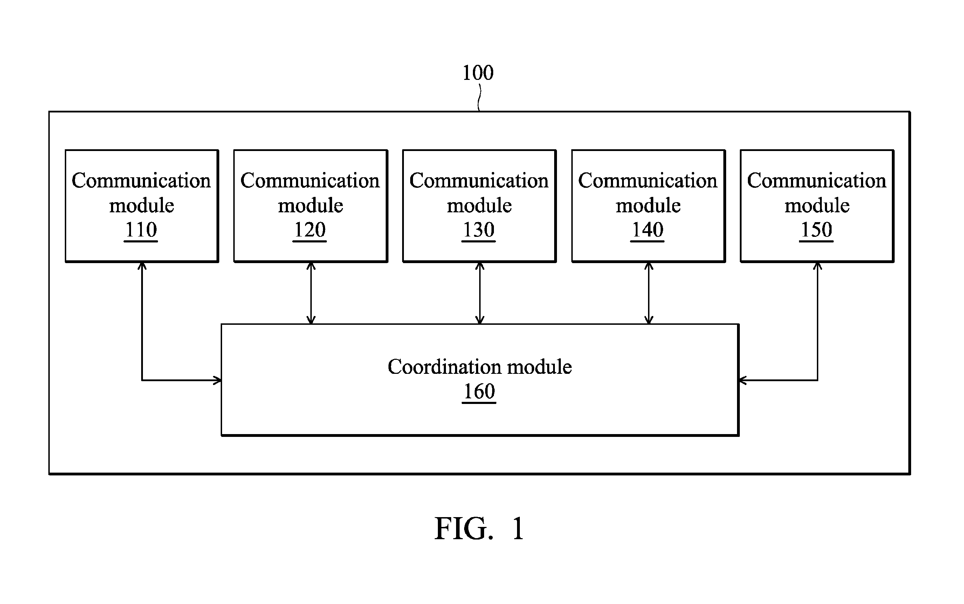

Fig. 1 is a block diagram illustrating a network communication device according to an embodiment of the invention. The network communication device 100 includes multiple communication modules 110∼150. Each of the communication modules 110∼150 is in compliance with a respective communication protocol and provides data communication services according to the respective communication protocols. The communication module 110 is used to establish a wireless personal area network (PAN) according to a Bluetooth communication protocol, and to communicate with other Bluetooth devices in the established wireless PAN. The communication modules 120 and 130 are used to establish network connections according to a cable modem or ADSL communication protocol. The communication module 140 is used to connect to an access point to establish a network connection according to the communication protocol of the WiFi technology. The communication module 150 is used to connect to a service network to establish a network connection according to an HSDPA communication protocol.

The network communication device 100 further includes a coordination module 160. When downloading, when the network communication device 100 receives a data download request from a user, the coordination module 160 divides the data download request into a plurality of sub-data download requests, wherein the data download request indicates the information of a desired downlink data and the sub-data download requests indicate the information of a plurality of downlink sub-data that makes up the desired downlink data. That is, the desired downlink data to be downloaded is divided into a plurality of downlink sub-data, and each of the sub-data download requests indicate one of the downlink sub-data. Next, the coordination module 160 sends the sub-data download requests to the communication modules 110∼150, respectively, so that the communication modules 110∼150 may start to download the downlink sub-data indicated in the received sub-data download requests. When all of the downlink sub-data has been successfully downloaded by the communication modules 110∼150, the coordination module 160 assembles the downloaded downlink sub-data to generate the desired downlink data and sends the desired downlink data to other processing modules (not shown) for subsequent processing, such as decapsulation, operation, or display of the data.

When uploading, the user may send a data upload request to the communication device 100 when he/she wants to upload data to the internet. When the data upload request has been received, the coordination module 160 divides the data upload request into a plurality of sub-data upload requests, wherein the data upload request indicates the information of an uplink data and the sub-data upload requests indicate the information of a plurality of uplink sub-data that makes up the uplink data. That is, the uplink data to be uploaded is considered to be divided into a plurality of uplink sub-data, and each of the sub-data upload requests indicates one of the uplink sub-data. In one embodiment, the uplink data to be uploaded may be a complete electronic file and the coordination module 160 may further divide the electronic file into a specific number of pieces which correspond to the sub-data upload requests, respectively. Next, the coordination module 160 sends the sub-data upload requests to the communication modules 110∼150, respectively, so that the communication modules 110∼150 may start to upload the uplink sub-data indicated in the received sub-data upload requests. When the indicated uplink sub-data is successfully uploaded, the communication modules 110∼150 send notifications to inform the coordination module 160 that the uplink data is successfully uploaded. Accordingly, since the network communication device 100 is able to divide and assemble traffic, a user is not required to be involved in the process of dividing and assembling traffic. All the user needs to do is to send out the data download/upload request and wait for confirmation of the downloaded/uploaded data, which is similar to that of other networking devices. Subsequently, the network communication device 100 divides the data download/upload request into a plurality of sub-data download/upload requests for the communication modules 110∼150 to cooperatively download/upload data, and assemble the downloaded sub-data to generate the original data when necessary.

In one embodiment, in efforts to save system resources, the network communication device 100 may enable one or more of the communication modules 110∼150 according to a predetermined operation setting received from the user. In other words, the coordination module 160 may determine which of the communication modules 110∼150 are enabled based on the predetermined operation setting, and then only send the sub-data download/upload requests to the enabled communication modules. In another embodiment, the coordination module 160 may further detect the operational statuses and transceiving rates of the communication modules 110∼150, and determine which of the communication modules 110∼150 to send the sub-data download/upload requests to according to the operational statuses and transceiving rates of the communication modules 110∼150. Therefore, the coordination module 160 may identify whether the communication modules 110∼150 are enabled, or about to be activated, or idle when enabled, or even congested. For example, an overflow occurring in the buffer of a specific communication module may indicate that a communication module is congested and overloaded. Thus, the coordination module 160 may skip the congested communication modules when sending the sub-data download/upload requests until the congested communication modules become un-congested. Since the transceiving rates of the communication modules 110∼150 are taken into account, the coordination module 160 may, for example, send the sub-data download/upload request with information indicating downlink/uplink sub-data of a large size to the communication modules with higher transceiving rates, and send the sub-data download/upload request with information indicating downlink/uplink sub-data of a small size to the communication modules with lower transceiving rates.

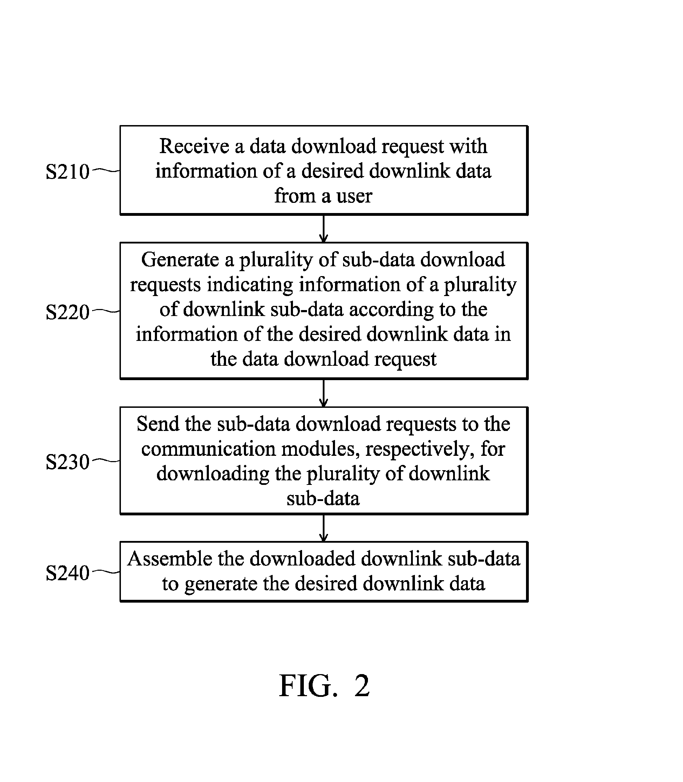

Fig. 2 is a flow chart illustrating a data transmission method according to an embodiment of the invention. The data transmission method is for network communication devices which have multiple communication modules, such as the network communication device 100, wherein each of the communication modules provides data communications services according to a respective communication protocol. The data transmission method begins when a data download request with information of a desired downlink data from a user is received (step S210). When the data download request is received, the network communication device 100 generates a plurality of sub-data download requests indicating information of a plurality of downlink sub-data according to the information of the desired downlink data in the data download request (step S220). Subsequently, the network communication device 100 sends the sub-data download requests to the communication modules 110∼150, respectively, to download the plurality of downlink sub-data (step S230). After all the downlink sub-data is successfully downloaded, the network communication device 100 assembles the downloaded downlink sub-data to generate the desired downlink data (step S240). Note that the network communication device 100 may further send a notification to the user indicating successful download of the desired downlink data.

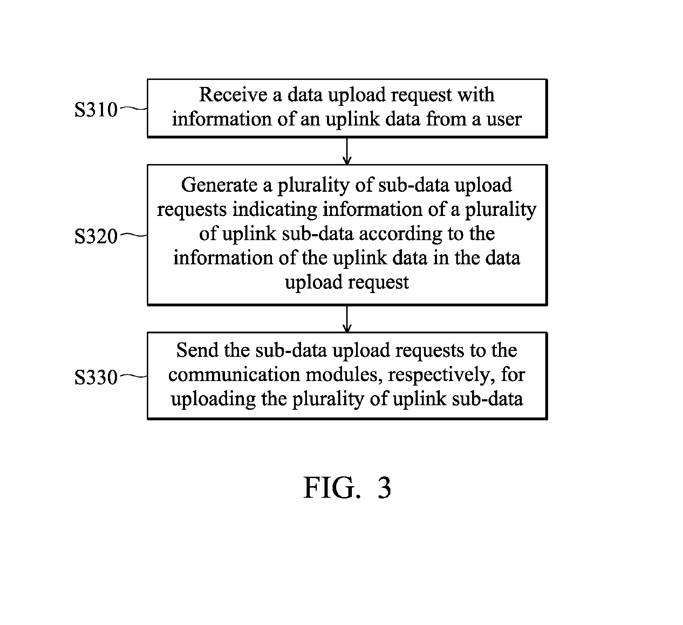

Fig. 3 is a flow chart illustrating a data transmission method according to another embodiment of the invention. In this embodiment, the data transmission method is used for a data upload scenario, and the applied network communication devices also have multiple communication modules, wherein each of the communication modules provides data communications services according to a respective communication protocol. The data transmission method begins when a data upload request with information of an uplink data from a user is received (step S310). When the data upload request is received, the network communication device 100 generates a plurality of sub-data upload requests indicating information of a plurality of uplink sub-data according to the information of the uplink data in the data upload request (step S320). Subsequently, the network communication device 100 sends the sub-data upload requests to the communication modules 110∼150, respectively, for uploading the plurality of uplink sub-data (step S330). After all the uplink sub-data is successfully uploaded, the network communication device 100 may further send a notification to the user indicating successful upload of the uplink data. The uplink data may be a single electronic file, or an electronic macro file consisting of multiple electronic files (e.g., an electronic file folder of image files). Specially, when the uplink data is an electronic macro file, the sub-data upload requests in the step S320 may be used to indicate one or more electronic files from the electronic macro file. For example, the sub-data upload request A is used to indicate image files *a* and *b* from the electronic file folder F, the sub-data upload request B is used to indicate an image file c from the electronic file folder F, and the sub-data upload request C is used to indicate image files *d* and *e* from the electronic file folder F. Alternatively, when the uplink data is a single electronic file, the data transmission method may determine whether to divide the data upload request according to the size of the uplink data. If so, the data transmission method may divide the data upload request as described in step S320. Otherwise, if the data transmission method determines not to divide the data upload request, only one sub-data upload request is generated in step S320.

In order to save system resources of the network communication device 100, the data transmission method may further comprise enabling one or more of the communication modules 110∼150 according to a predetermined operation setting received from the user. In other words, based on a predetermined operation setting, it may be determined which of the communication modules 110∼150 are enabled, and the sub-data download/upload requests in the steps S230 and S330 may be sent only to the enabled communication modules. Alternatively, the data transmission method may further comprise detecting the operational statuses and transceiving rates of the communication modules 110∼150, and determining which of the communication modules 110∼150 to send the sub-data download/upload requests to according to the operational statuses and transceiving rates of the communication modules 110∼150. Therefore, the communication modules 110∼150 which are enabled, or about to be activated, or idle when enabled, or congested, may be identified. Additionally, by detecting the transceiving rates of the communication modules 110∼150, the data transmission method allows the sub-data download/upload requests to be sent to corresponding communication modules 110∼150 according to the transceiving rates. For example, a sub-data download/upload request with information indicating downlink/uplink sub-data of a large size may be sent to communication modules with higher transceiving rates, and a sub-data download/upload request with information indicating downlink/uplink sub-data of a small size may be sent to the communication modules with lower transceiving rates.

The data transmission method may be implemented with software, hardware, or any combination of both. The hardware may be any devices with network communication functions, such as a personal computer, a server, a laptop, a personal digital assistant (PDA), or a mobile phone, etc. The software may be program codes stored in a system memory, or other storage media, such as removable/non-removable or volatile/non-volatile memories included in or accessible to the described hardware. For example, the software may be stored in a magnetic/optical medium, a flash memory card, a digital tape, a solid-state random access memory, or a solid-state read-only memory, etc.

While the invention has been described by way of example and in terms of preferred embodiment, it is to be understood that the invention is not limited thereto. Those who are skilled in this technology can still make various alterations and modifications without departing from the scope and spirit of this invention. For example, the supported communication technologies of the network communication modules 110∼150 are not limited to Bluetooth, cable modem, ADSL, WiFi, and HSPDA technology, the network communication modules 110∼150 may also support other wireless communication technologies, such as CDMA-2000, Time Division-Synchronous CDMA (TDS-CDMA), General Packet Radio Service (GPRS), or Worldwide Interoperability for Microwave Access (WiMAX) technology. Therefore, the scope of the invention shall be defined and protected by the following claims and their equivalents.

## Claims

1. A network communication device, comprising:
a plurality of communication modules, providing data communications services according to a plurality of communication protocols, respectively; and
a coordination module, generating a plurality of sub-data download requests indicating information of a plurality of downlink sub-data according to a data download request with information of a desired downlink data, sending the sub-data download requests to the communication modules, respectively, for downloading the plurality of downlink sub-data, and assembling the downloaded downlink sub-data to generate the desired downlink data.

2. The network communication device of claim 1, wherein the coordination module further determines which of the communication modules are enabled according to a predetermined operation setting, and only sends the sub-data download requests to the enabled communication modules.

3. The network communication device of claim 1, wherein the coordination module further detects a plurality of operational statuses and transceiving rates corresponding to the communication modules, and sends the sub-data download requests to the communication modules according to the operational statuses and the transceiving rates.

4. The network communication device of claim 1, wherein the coordination module further generates a plurality of sub-data upload requests indicating information of a plurality of uplink sub-data according to a data upload request with information of an uplink data, and sends the sub-data upload requests to the communication modules, respectively, for uploading the plurality of uplink sub-data, and the uplink data consists of the plurality of uplink sub-data.

5. The network communication device of claim 4, wherein the coordination module further determines whether the communication modules are enabled according to a predetermined operation setting, and only sends the sub-data upload requests to the enabled communication modules.

6. The network communication device of claim 4, wherein the coordination module further detects a plurality of operational statuses and transceiving rates corresponding to the communication modules, and sends the sub-data upload requests to the communication modules according to the operational statuses and the transceiving rates.

7. A data transmission method for a network communication device with a plurality of communication modules providing data communications services according to a plurality of communication protocols, respectively, comprising:
receiving a data download request with information of a desired downlink data from a user;
generating a plurality of sub-data download requests indicating information of a plurality of downlink sub-data according to the information of the desired downlink data in the data download request;
sending the sub-data download requests to the communication modules, respectively, for downloading the plurality of downlink sub-data; and
assembling the downloaded downlink sub-data to generate the desired downlink data.

8. The data transmission method of claim 7, further comprising determining which of the communication modules are enabled according to a predetermined operation setting, wherein the sub-data download requests are sent only to the enabled communication modules.

9. The data transmission method of claim 7, further comprising detecting a plurality of operational statuses and transceiving rates corresponding to the communication modules, wherein the sub-data download requests are sent to the communication modules according to the operational statuses and the transceiving rates.

10. The data transmission method of claim 7, further comprising generating a plurality of sub-data upload requests indicating information of a plurality of uplink sub-data according to a data upload request with information of an uplink data, and sending the sub-data upload requests to the communication modules, respectively, for uploading the plurality of uplink sub-data, wherein the uplink data consists of the plurality of uplink sub-data.

11. The data transmission method of claim 10, further comprising determining whether the communication modules are enabled according to a predetermined operation setting, wherein the sub-data upload requests are sent only to the enabled communication modules.

12. The data transmission method of claim 10, further comprising detecting a plurality of operational statuses and transceiving rates corresponding to the communication modules, and sending the sub-data upload requests to the communication modules according to the operational statuses and the transceiving rates.
